# EUROPEAN PATENT SPECIFICATION

(11) **EP 2 799 594 B1**
(45) Date of publication and mention of the grant of the patent: **31.10.2018**
(21) Application number: 12861651.3
(22) Date of filing: 12.11.2012
(51) Int. Cl.: C23C 22/00, C21D 8/12, C21D 9/46, C22C 38/00, C22C 38/60, C23C 22/30, C23C 22/33, C23C 22/74, H01F 1/16

(54) **DIRECTIONAL ELECTROMAGNETIC STEEL SHEET WITH COATING, AND METHOD FOR PRODUCING SAME**
GERICHTETES ELEKTROMAGNETISCHES STAHLBLECH MIT EINER BESCHICHTUNG UND VERFAHREN ZUR HERSTELLUNG DAVON
TÔLE D'ACIER ÉLECTROMAGNÉTIQUE DIRECTIONNELLE AYANT UN REVÊTEMENT, ET SON PROCÉDÉ DE FABRICATION

(30) Priority: 28.12.2011 JP 2011288242
(43) Date of publication of application: 05.11.2014
(73) Proprietor: JFE Steel Corporation, Tokyo 100-0011 (JP)
(72) Inventor: OKUBO Tomoyuki, Tokyo 100-0011 (JP); KIJIMA Gou, Tokyo 100-0011 (JP); WATANABE Makoto, Tokyo 100-0011 (JP)
(74) Representative: Haseltine Lake LLP
(86) International application number: PCT/JP2012/079239
(87) International publication number: WO 2013/099455

(56) References cited:
- EP-A1- 0 406 833
- EP-A1- 0 589 418
- EP-A1- 2 746 410
- EP-A1- 2 770 075
- CA-A1- 2 802 019
- JP-A- H1 171 683
- JP-A- H06 128 646
- JP-A- H09 279 359
- US-A- 3 985 583
- US-A- 4 238 534
- US-A- 4 347 085

## Description

### TECHNICAL FIELD

This invention relates to a coated grain oriented electrical steel sheet, and a method for manufacturing the same.

### BACKGROUND ART

Grain oriented electrical steel sheets are materials mainly used as iron cores of transformers, and such a grain oriented electrical steel sheet is required to have less iron loss.

One method to reduce iron loss of the grain oriented electrical steel sheet is imparting the tensile stress. Specifically, it is known that, when the tensile stress is imparted to the grain oriented electrical steel sheet, the 180° domain width is decreased and abnormal eddy current loss is reduced, thereby lowering iron loss.

Accordingly, a coating imparting insulation properties and the tensile stress (hereinafter called "tension coating" or simply "coating") is generally formed on a surface of the grain oriented electrical steel sheet.

In the meantime, while a ceramic film mainly composed of forsterite (Mg₂SiO₄) is generally present on the surface of the grain oriented electrical steel sheet, the tensile stress caused by the ceramic coating is small and hence, the ceramic coating is not very effective in lowering iron loss of the grain oriented electrical steel sheet.

To cope with it, there are conventionally proposed tension coatings imparting a higher tensile stress and thus further reducing iron loss, such as a tension coating mainly composed of a phosphoric acid-based glass (e.g., MgO-P₂O₅-SiO₂-based glass stated in Patent Literature 1), a nitride (e.g., TiN stated in Patent Literature 2), a carbide (e.g., TiC stated in Patent Literature 2), or the like. Since the foregoing ingredients as the main ingredients of the tension coatings have a smaller thermal expansion coefficient than that of the grain oriented electrical steel sheet, the formation of the coatings at high temperatures enables them to impart the tensile stress to the grain oriented electrical steel sheet due to a difference in the thermal expansion.

However, while the tension coating mainly composed of a nitride or a carbide imparts a high tensile stress, a vapor deposition process such as PVD (Physical Vapor Deposition) and CVD (Chemical Vapor Deposition) is required and therefore there is a problem of high cost.

In contrast, the tension coating mainly composed of a phosphoric acid-based glass (hereinafter also called "phosphoric acid-based glass coating") can be formed by a relatively simple method involving applying a treatment solution and and baking, and baking of the coating can be carried out simultaneously with flattening annealing, which leads to low cost and this is advantageous.

Accordingly, the phosphoric acid-based glass coating is particularly common as a tension coating, and various techniques are proposed (for example, see Patent Literatures 3 to 5). Each of EP 0589418 A1, EP 0406833 A1, US 3985583 A1, US 4238534 A1, US 4347085 A1 discloses a phosphate-coated grain oriented electrical steel sheet and methods for manufacturing coated grain oriented electrical steel sheet.

### CITATION LIST

### PATENT LITERATURE

Patent Literature 1: JP 56-52117 B
Patent Literature 2: JP 63-54767 B
Patent Literature 3: JP 1-147074 A
Patent Literature 4: JP 2007-217758 A
Patent Literature 5: JP 2008-50676 A

### SUMMARY OF INVENTION

### TECHNICAL PROBLEMS

However, the tensile stress caused by a conventional phosphoric acid-based glass coating is not necessarily sufficient, so that there is a problem in that the reduction in iron loss is not sufficient.

An object of the present invention is therefore to, in a grain oriented electrical steel sheet having a phosphoric acid-based glass coating formed thereon, further reduce iron loss of the grain oriented electrical steel sheet.

### SOLUTION TO PROBLEMS

The present inventors have made an intensive study to achieve the object. As a result, the inventors found that a coating formed with a weight ratio of specific components in a coating treatment solution being within a predetermined range and with a steel sheet temperature in baking being within a predetermined temperature range and including a predetermined amount of phosphate crystal phase causes a higher tensile stress in a grain oriented electrical steel sheet and hence iron loss is further reduced. The invention has been thus completed.

Specifically, the invention provides the following (1) to (3).
(1) A coated grain oriented electrical steel sheet, comprising: a grain oriented electrical steel sheet; and a coating that is formed on a surface of the grain oriented electrical steel sheet, that contains elements of P, Si, Cr and O as well as at least one element selected from the group consisting of Mg, Al, Ni, Co, Mn, Zn, Fe, Ca and Ba, and that includes at least 5 wt% of phosphate crystal phase.
(2) A method for manufacturing a coated grain oriented electrical steel sheet, comprising the steps of: preparing a grain oriented electrical steel sheet; and obtaining the coated grain oriented electrical steel sheet by applying onto a surface of the grain oriented electrical steel sheet with a coating treatment solution including a primary phosphate salt containing at least one element selected from the group consisting of Mg, Al, Ni, Co, Mn, Zn, Fe, Ca and Ba; colloidal silica; and at least one chromic acid compound selected from the group consisting of chromic anhydride, chromate salts and bichromate salts, followed by baking, wherein condition (i) or (ii) is satisfied:
   (i) 800≤T<860, T≥1010 - 399R, 0.1≤R≤0.5
   (ii) 860≤T≤1000, T≥985 - 399R, 0.1≤R≤0.5
   where T denotes a steel sheet temperature T (unit: °C) in the baking, and R denotes a weight ratio (Cr₂O₃/P₂O₅) of the chromic acid compound (in terms of Cr₂O₃) to the primary phosphate salt (in terms of P₂O₅) in the coating treatment solution.
(3) The method for manufacturing a coated grain oriented electrical steel sheet according to (2), wherein the step of preparing a grain oriented electrical steel sheet is a step involving hot-rolling a slab for a grain oriented electrical steel sheet, annealing a resulting hot-rolled steel sheet, cold-rolling the annealed steel sheet one time or at least two times with intervention of intermediate annealing, then after primary recrystallization annealing and subsequent application of an annealing separator, subjecting the steel sheet to final finishing annealing so as to obtain the grain oriented electrical steel sheet, and wherein a heating rate in a heating process from 500°C to 700°C in the primary recrystallization annealing is 50 to 300°C/sec.

### ADVANTAGEOUS EFFECTS OF INVENTION

According to the present invention, in a grain oriented electrical steel sheet coated with a phosphoric acid-based glass coating, iron loss of the grain oriented electrical steel sheet can be further reduced.

### BRIEF DESCRIPTION OF DRAWINGS

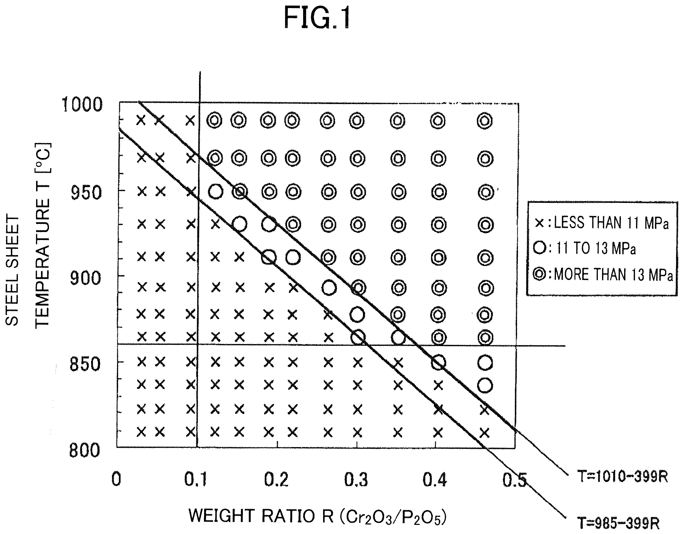

[FIG. 1] FIG. 1 is a graph showing the relationship among a weight ratio R (Cr₂O₃/P₂O₅), a steel sheet temperature T in baking, and the tensile stress.

### DESCRIPTION OF EMBODIMENTS

### [Details about What Led to the Present Invention]

First, details about what led to the present invention will be explained.

The inventors prepared coating treatment solutions containing a primary magnesium phosphate, colloidal silica, and chromic anhydride at various compositional ratios, each of the solutions was applied onto a grain oriented electrical steel sheet having a forsterite film formed thereon, and the resulting steel sheets were subjected to baking with a soaking time of 20 seconds in terms of steel sheet temperature in baking. Then, the inventors measured tensile stresses respectively imparted by the formed coatings to the grain oriented electrical steel sheets as well as other properties. The measurement of the tensile stress was performed by converting the amount of deflection of the grain oriented electrical steel sheet at the time when the coating on one side of the steel sheet was removed with sodium hydroxide.

As a result of the measurement, the inventors found that by increasing the amount of chromic anhydride with respect to a primary magnesium phosphate and increasing the steel sheet temperature in baking, the tensile stress imparted by the coating to the grain oriented electrical steel sheet is improved.

Furthermore, when the coating causing a high tensile stress was analyzed by X-ray diffraction, a strong diffraction peak of Mg₂P₂O₇ was confirmed, and this led to one possibility that the crystallization of a phosphate improved the Young's modulus of the coating and hence the tensile stress was improved. At that time, quantitative determination on Mg₂P₂O₇ was performed using the calibration curve of a standard sample which was separately prepared, and it was found that the coating having imparted a high tensile stress included at least 5 wt% of Mg₂P₂O₇ crystal phase.

The inventors have made an intensive study on conditions for obtaining a coating imparting a high tensile stress when such a coating treatment solution as described above is applied onto the grain oriented electrical steel sheet. As a result, the inventors found that when condition (i) or (ii) to be described later in detail is satisfied, the crystallization of a phosphate is promoted, the tensile stress imparted by the coating is improved, and iron loss of the grain oriented electrical steel sheet can be reduced.

It should be noted that Cr³⁺ probably invades the site of Mg²⁺ in the glass and the expelled Mg²⁺ possibly serves to promote the crystallization of Mg₂P₂O₇, although a detailed mechanism thereof is not clear.

### [Method for Manufacturing Grain Oriented Electrical Steel Sheet with Coating]

Next, a method for manufacturing a coated grain oriented electrical steel sheet according to the present invention (hereinafter also simply called "manufacturing method of the invention") is described below.

Generally speaking, the manufacturing method of the invention includes a step of preparing a grain oriented electrical steel sheet (hereinafter also called "preparing step") and a step of obtaining a coated grain oriented electrical steel sheet by applying a coating treatment solution onto a surface of the prepared grain oriented electrical steel sheet, followed by baking (hereinafter also called "coating step").

The respective steps are described below in detail.

### <Preparing Step>

The chemical composition of the grain oriented electrical steel sheet to be prepared in the preparing step is not particularly limited and a known composition can be used. In order to attain further reduction in iron loss, it is preferable to use a steel sheet in which the size of secondary recrystallized grains is smaller.

The preparing step is not particularly limited as long as it is a step of preparing a grain oriented electrical steel sheet, and examples thereof include a step of obtaining a grain oriented electrical steel sheet from a slab for a grain oriented electrical steel sheet (steel slab).

Specific examples of the step of obtaining a grain oriented electrical steel sheet include a step involving hot-rolling a slab for a grain oriented electrical steel sheet, annealing the hot-rolled steel sheet, cold-rolling the annealed steel sheet one time or at least two times with intervention of intermediate annealing to thereby allow the steel sheet to have the final thickness, then after primary recrystallization annealing and subsequent application of an annealing separator containing MgO or the like as the main ingredient, subjecting the steel sheet to final finishing annealing. Final finishing annealing may be followed by planarization annealing for shape correction.

At that time, conditions for primary recrystallization annealing are not particularly limited, but the heating rate in the heating process from 500°C to 700°C is preferably 10 to 300°C/sec and more preferably 50 to 300°C/sec. When the heating rate is within the above-defined range, the size of secondary recrystallized grains in the grain oriented electrical steel sheet to be obtained can be small and this enables the reduction in iron loss to be further excellent.

The final thickness of the grain oriented electrical steel sheet obtained by the above-described step is not particularly limited but is preferably 0.10 to 0.50 mm and more preferably 0.15 to 0.35 mm.

### <Coating Step>

The coating step is a step of obtaining the coated grain oriented electrical steel sheet by applying a coating treatment solution onto the surface of the grain oriented electrical steel sheet prepared by the above-described preparing step, followed by baking.

First, a coating treatment solution used in the coating step is explained. The coating treatment solution contains a primary phosphate salt, colloidal silica and a chromic acid compound.

The primary phosphate salt contained in the coating treatment solution contains at least one element selected from the group consisting of Mg, Al, Ni, Co, Mn, Zn, Fe, Ca and Ba, and examples thereof include at least one selected from the group consisting of a primary magnesium phosphate, a primary aluminum phosphate, a primary nickel phosphate, a primary cobalt phosphate, a primary manganese phosphate, a primary zinc phosphate, a primary iron phosphate, a primary calcium phosphate and a primary barium phosphate.

Of these, a primary magnesium phosphate that is easily crystallized is preferably used because a further excellent tensile stress can be attained.

Colloidal silica contained in the coating treatment solution is a dispersion of SiO₂ as a base unit in water and generally contains 20 to 30 wt% of SiO₂ in terms of solid content. The average particle size of colloidal silica is not particularly limited but is preferably 5 to 50 nm, for instance.

A chromic acid compound contained in the coating treatment solution is at least one selected from the group consisting of chromic anhydride, chromate salts and bichromate salts. Usable chromate and bichromate salts are exemplified by Na-, K-, Mg-, Ca-, Mn-, Mo-, Zn- and Al- salts.

In order to enhance anti-stick characteristics of the coating to be formed, silica powder (silica flour), alumina powder (alumina flour), or the like having an average particle size of 2 to 20 µm may be added to the coating treatment solution.

The molar ratio (P₂O₅/SiO₂) of a primary phosphate salt (in terms of P₂O₅) to colloidal silica (in terms of SiO₂) contained in the coating treatment solution is preferably 0.15 to 4.0, and more preferably 0.2 to 1.0. The molar ratio (P₂O₅/SiO₂) within the above-defined range enables to attain a further excellent tensile stress.

In the coating step, the above-described coating treatment solution is applied onto the surface of the grain oriented electrical steel sheet, followed by baking, thereby forming the coating. A method of application of the coating treatment solution is not particularly limited and any known method may be used.

As for baking, a known method may be used as well. However, the steel sheet temperature (maximum temperature) in baking is limited so as to fall within a specific range. Specifically, the steel sheet temperature T (unit: °C) in baking satisfies either of the following conditions (i) and (ii) ("R" in the conditions will be defined later).

(i) 800≤T<860, T≥1010 - 399R, 0.1≤R≤0.5
(ii) 860≤T≤1000, T≥985 - 399R, 0.1≤R≤0.5

When baking is performed so as to satisfy condition (i) or (ii) above, a primary phosphate salt is reacted, the crystallization is promoted, and hence a high tensile stress can be obtained.

Furthermore, in order to attain a still higher tensile stress, it is preferable to satisfy the following condition (iii).
(iii) 860≤T≤1000, T≥1010 - 399R, 0.1≤R≤0.5

The range of the steel sheet temperature T is 800 to 1000°C. When the steel sheet temperature T is less than 800°C, an excellent tensile stress cannot be obtained, whilst when the steel sheet temperature T exceeds 1000°C, the effect is saturated and in addition, it is difficult to control plastic deformation of the grain oriented electrical steel sheet. In contrast, when the steel sheet temperature T is within the above-defined range, the effect is not saturated, an excellent tensile stress can be obtained, and the control over plastic deformation can be ensured.

The steel sheet temperature T is preferably within the range from 800 to 900°C in terms of suppressing plastic elongation of the grain oriented electrical steel sheet.

In the foregoing conditions (i) to (iii), R denotes the weight ratio (Cr₂O₃/P₂O₅) of a chromic acid compound (in terms of Cr₂O₃) to a primary phosphate salt (in terms of P₂O₅) in the coating treatment solution.

When the weight ratio R is less than 0.1, a high tensile stress cannot be obtained, whilst when the weight ratio R exceeds 0.5, basic properties such as corrosion resistance deteriorate. When the weight ratio R is within the range from 0.1 to 0.5, a high tensile stress can be obtained with the basic properties being maintained.

A higher weight ratio R is preferred in terms of baking with lower temperatures. To be more specific, the weight ratio R is preferably at least 0.2, and more preferably at least 0.3.

The soaking time in terms of steel sheet temperature in baking is not particularly limited but is preferably 120 seconds or less, and more preferably 5 to 30 seconds.

### [Coated Grain Oriented Electrical Steel Sheet]

Next, a coated grain oriented electrical steel sheet according to the present invention is described.

The coated grain oriented electrical steel sheet according to the present invention is obtained by the manufacturing method of the invention, and generally speaking, comprises a grain oriented electrical steel sheet; and a coating formed on a surface of the grain oriented electrical steel sheet (hereinafter also called "coating of the invention").

The coating of the invention is formed from the above-described coating treatment solution and therefore contains elements of P, Si, Cr and O as well as at least one element selected from the group consisting of Mg, Al, Ni, Co, Mn, Zn, Fe, Ca and Ba.

For the same reason, in the coating of the invention, the weight ratio R (Cr₂O₃/P₂O₅) is 0.1 to 0.5, preferably at least 0.2, and more preferably at least 0.3.

In addition, the coating of the invention includes phosphate crystal phase in an amount of 5 wt% or more. This coating serves to impart an excellent tensile stress to the grain oriented electrical steel sheet. The amount of the crystal phase is preferably at least 10 wt%, and more preferably at least 15 wt% because a further excellent tensile stress can be attained.

Furthermore, the amount of the crystal phase is preferably up to 50 wt%, and more preferably up to 40 wt% because due to an excessive amount of the crystal phase, more cracks arise in the coating and corrosion resistance degrades.

A quantitative method of the crystal phase is not particularly limited. A simple method is a method using X-ray diffraction, and examples thereof include a quantitative method using an integrated intensity ratio of a crystalline component to an amorphous component; a quantitative method using the calibration curve of a standard sample prepared in advance; and a quantitative method using an integral intensity ratio to a standard reference material.

The thickness of the coating of the invention is not particularly limited but is preferably 0.1 to 5 µm, and more preferably 0.5 to 3 µm because too thin a coating results in the decrease in insulation properties while too thick a coating results in the decrease in a lamination factor.

### EXAMPLES

The present invention is described below by way of examples. However, the present invention is not limited thereto.

First, a steel slab containing 0.05 wt% of C, 3.3 wt% of Si, 0.1 wt% of Mn, 0.022 wt% of sol.Al, 0.005 wt% of N and 0.02 wt% of Se, with the balance being Fe and inevitable impurities, was subjected to hot rolling, the resulting hot-rolled steel sheet was annealed, followed by two times of cold rolling with intermediate annealing performed therebetween, thus obtaining a steel sheet having a final thickness of 0.27 mm.

Subsequently, the obtained steel sheet was subjected to decarburization annealing (primary recrystallization annealing) at 830°C for one minute, an annealing separator mainly composed of MgO was applied onto the surface of the annealed steel sheet, and the resulting steel sheet was subjected to final finishing annealing at 1200°C for five hours to thereby obtain a grain oriented electrical steel sheet having a forsterite film formed thereon.

At that time, the heating rate in the heating process from 500°C to 700°C in primary recrystallization annealing was varied depending on the sample. The heating rates (unit: °C/sec) are shown in Table 1 below.

Next, coating treatment solutions each containing a primary phosphate salt, colloidal silica and a chromic acid compound were prepared. The primary phosphate salts and chromic acid compounds as used are shown in Table 1 below. For colloidal silica, SNOWTEX 30 manufactured by Nissan Chemical Industries, Ltd. was used.

The coating treatment solutions were each prepared so that the molar ratio (P₂O₅/SiO₂) of a primary phosphate salt (in terms of P₂O₅) to colloidal silica (in terms of SiO₂) was 0.35 and so that the weight ratio R (Cr2O₃/P2O₅) of a chromic acid compound (in terms of Cr₂O₃) to a primary phosphate salt (in terms of P₂O₅) was of a value shown in Table 1 below.

The thus prepared coating treatment solutions were each applied onto the surface of the obtained grain oriented electrical steel sheet, followed by baking, so as to form a coating (thickness: 1.0 µm), thereby obtaining coated grain oriented electrical steel sheets. At that time, the steel sheet temperature in baking was varied depending on the sample. The steel sheet temperatures T (unit: °C) are shown in Table 1 below. The soaking time in terms of steel sheet temperature in baking was set to 20 seconds.

For the coated grain oriented electrical steel sheets as obtained, the quantity of phosphate crystal phase included in the coating was determined for each sample. As a quantitative method of the crystal phase, a method of determining the quantity based on an integral intensity ratio of a crystalline component to a non-crystalline component with the use of X-ray diffraction was employed. The results of the quantitative determination of the crystal phase (unit: wt%) are shown in Table 1 below.

In addition, for the coated grain oriented electrical steel sheets as obtained, the iron loss W_{17/50} with a magnetic flux density of 1.7 T and a frequency of 50 Hz was measured, and also the tensile stress imparted by the coating to the grain oriented electrical steel sheet was measured. The measurement of the tensile stress was performed by converting the amount of deflection of the grain oriented electrical steel sheet at the time when the coating on one surface of the steel sheet was removed with sodium hydroxide. The measurement results of the tensile stress (unit: MPa) and the iron loss W_{17/50} (unit: W/kg) are shown in Table 1 below.

### [Table 1]

**Table 1**

| No. | Heating rate [°C/sec] | Primary phosphate salt | Chromic acid compound | Weight ratio R (Cr₂O₃/P₂O₅) | Steel sheet temperature T [°C] | Crystal phase [wt%] | Tensile stress [MPa] | Iron loss W_{17/50} [W/kg] | Remarks |
|---|---|---|---|---|---|---|---|---|---|
| 1 | 20 | Primary magnesium phosphate | Chromic anhydride | 0.05 | 980 | 1 | 10.6 | 0.953 | Comparative example |
| 2 | 20 | Primary magnesium phosphate | Chromic anhydride | 0.21 | 960 | 16 | 15.1 | 0.894 | Example |
| 3 | 20 | Primary magnesium phosphate | Chromic anhydride | 0.21 | 910 | 10 | 12.3 | 0.912 | Example |
| 4 | 20 | Primary magnesium phosphate | Chromic anhydride | 0.21 | 845 | <1 | 10.2 | 0.943 | Comparative example |
| 5 | 20 | Primary magnesium phosphate | Chromic anhydride | 0.32 | 895 | 13 | 14.9 | 0.882 | Example |
| 6 | 20 | Primary magnesium phosphate | Chromic anhydride | 0.32 | 875 | 8 | 11.9 | 0.908 | Example |
| 7 | 20 | Primary magnesium phosphate | Chromic anhydride | 0.32 | 840 | 1 | 10.6 | 0.962 | Comparative example |
| 8 | 20 | Primary magnesium phosphate | Chromic anhydride | 0.44 | 870 | 12 | 14.8 | 0.878 | Example |
| 9 | 20 | Primary magnesium phosphate | Chromic anhydride | 0.44 | 850 | 9 | 12.5 | 0.904 | Example |
| 10 | 20 | Primary magnesium phosphate | Chromic anhydride | 0.44 | 820 | <1 | 10.5 | 0.949 | Comparative example |
| 11 | 20 | Primary magnesium phosphate | Potassium bichromate | 0.34 | 895 | 15 | 15.1 | 0.889 | Example |
| 12 | 20 | Primary magnesium phosphate | Magnesium bichromate | 0.34 | 895 | 13 | 14.6 | 0.882 | Example |
| 13 | 20 | Primary magnesium phosphate | Aluminum bichromate | 0.34 | 895 | 14 | 14.7 | 0.881 | Example |
| 14 | 20 | Primary aluminum phosphate | Chromic anhydride | 0.35 | 885 | 9 | 12.1 | 0.906 | Example |
| 15 | 20 | Primary nickel phosphate | Chromic anhydride | 0.35 | 885 | 7 | 11.9 | 0.903 | Example |
| 16 | 20 | Primary cobalt phosphate | Chromic anhydride | 0.35 | 885 | 8 | 11.6 | 0.911 | Example |
| 17 | 20 | Primary manganese phosphate | Chromic anhydride | 0.35 | 885 | 9 | 11.5 | 0.905 | Example |
| 18 | 20 | Primary zinc phosphate | Chromic anhydride | 0.35 | 885 | 8 | 11.9 | 0.903 | Example |
| 19 | 20 | Primary iron phosphate | Chromic anhydride | 0.35 | 885 | 9 | 11.8 | 0.909 | Example |
| 20 | 20 | Primary calcium phosphate | Chromic anhydride | 0.35 | 885 | 5 | 11.5 | 0.912 | Example |
| 21 | 20 | Primary barium phosphate | Chromic anhydride | 0.35 | 885 | 8 | 11.8 | 0.904 | Example |
| 22 | 80 | Primary magnesium phosphate | Chromic anhydride | 0.33 | 890 | 16 | 15.4 | 0.873 | Example |
| 23 | 250 | Primary magnesium phosphate | Chromic anhydride | 0.33 | 890 | 17 | 15.3 | 0.861 | Example |

As can be clearly seen from the results shown in Table 1 above, it was revealed that, in comparison with the samples (Comparative Examples) which satisfied neither condition (i) nor condition (ii) described above, in the samples (Examples) which satisfied condition (i) or (ii), the tensile stress imparted to the grain oriented electrical steel sheet was high and iron loss was reduced.

It was also revealed that, in comparison with the samples in which the heating rates from 500°C to 700°C in primary recrystallization annealing were each 20°C/sec, the samples (Nos. 22 and 23) in which the heating rates were respectively 80°C/sec and 250°C/sec were more excellent in the reduction in iron loss.

Next, the coatings were formed with varied weight ratio R of the coating treatment solution and with varied steel sheet temperature T in baking, the tensile stress imparted by the formed coatings to the grain oriented electrical steel sheets were measured, and the measurement results were plotted on a graph shown in FIG. 1.

It should be noted that conditions other than the weight ratio R and the steel sheet temperature T in baking (e.g., components contained in the coating treatment solution) were the same as those of the samples of Nos. 1 to 10 in Table 1.

FIG. 1 is a graph showing the relationship among the weight ratio R (Cr₂O₃/P₂O₅), the steel sheet temperature T in baking, and the tensile stress.

When a measured tensile stress was less than 11 MPa, the tensile stress was determined to be low and to be poor in the reduction in iron loss, and the mark " × " was plotted in FIG. 1; when a measured tensile stress was 11 to 13 MPa, the tensile stress was determined to be high and to be excellent in the reduction in iron loss, and the mark " O" was plotted; and when a measured tensile stress was more than 13 MPa, the tensile stress was determined to be still higher and to be extremely excellent in the reduction in iron loss, and the mark "⊚" was plotted.

As can be clearly seen from the graph of FIG. 1, it was revealed that plotted marks were "○" or "⊚" in the area in which condition (i) or (ii) was satisfied, and that the tensile stress was high and the reduction in iron loss was excellent in this area.

In particular, it was revealed that plotted marks were all "⊚" in the area in which condition (iii) was satisfied, and that the tensile stress was still higher and the reduction in iron loss was extremely excellent in this area.

## Claims

1. A coated grain oriented electrical steel sheet, comprising:
a grain oriented electrical steel sheet; and
a coating that is formed on a surface of the grain oriented electrical steel sheet, that contains elements of P, Si, Cr and O as well as at least one element selected from the group consisting of Mg, Al, Ni, Co, Mn, Zn, Fe, Ca and Ba, and that includes at least 5 wt% of phosphate crystal phase.

2. A method for manufacturing a coated grain oriented electrical steel sheet, comprising the steps of:
preparing a grain oriented electrical steel sheet; and
obtaining the coated grain oriented electrical steel sheet by applying onto a surface of the grain oriented electrical steel sheet with a coating treatment solution including a primary phosphate salt containing at least one element selected from the group consisting of Mg, Al, Ni, Co, Mn, Zn, Fe, Ca and Ba; colloidal silica; and at least one chromic acid compound selected from the group consisting of chromic anhydride, chromate salts and bichromate salts, followed by baking,
wherein condition (i) or (ii) is satisfied:
(i) 800≤T<860, T≥1010 - 399R, 0.1≤R≤0.5
(ii) 860≤T≤1000, T≥985 - 399R, 0.1≤R≤0.5 where T denotes a steel sheet temperature T (unit: °C) in the baking, and R denotes a weight ratio (Cr₂O₃/P₂O₅) of the chromic acid compound (in terms of Cr₂O₃) to the primary phosphate salt (in terms of P₂O₅) in the coating treatment solution.

3. The method for manufacturing a coated grain oriented electrical steel sheet according to claim 2,
wherein the step of preparing a grain oriented electrical steel sheet is a step involving hot-rolling a slab for a grain oriented electrical steel sheet, annealing a resulting hot-rolled steel sheet, cold-rolling the annealed steel sheet one time or at least two times with intervention of intermediate annealing, then after primary recrystallization annealing and subsequent application of an annealing separator, subjecting the steel sheet to final finishing annealing so as to obtain the grain oriented electrical steel sheet, and
wherein a heating rate in a heating process from 500°C to 700°C in the primary recrystallization annealing is 50 to 300°C/sec.

## Patentansprüche

1. Beschichtetes, kornorientiertes Elektrostahlblech, umfassend:
ein kornorientiertes Elektrostahlblech; und
eine Beschichtung, die auf einer Fläche des kornorientierten Elektrostahlblechs gebildet ist, die die Elemente P, Si, Cr und O sowie mindestens ein Element enthält, das aus der Gruppe ausgewählt wird, die aus Mg, Al, Ni, Co, Mn, Zn, Fe, Ca und Ba besteht, und die mindestens 5 Gewichtsprozent Phosphat-Kristallphase enthält.

2. Verfahren zum Herstellen eines beschichteten, kornorientierten Elektrostahlblechs, das die folgenden Schritte umfasst:
Herstellen eines kornorientierten Elektrostahlblechs; und
Gewinnen des beschichteten, kornorientierten Elektrostahlblechs durch Anwenden einer Beschichtungsbehandlung auf eine Oberfläche des kornorientierten Elektrostahlblechs, die ein primäres Phosphatsalz umfasst, das mindestens ein Element enthält, das aus der Gruppe ausgewählt wird, die aus Mg, Al, Ni, Co, Mn, Zn, Fe, Ca und Ba besteht; kolloidales Siliziumdioxid; und mindestens eine Chromsäureverbindung, die aus der Gruppe ausgewählt wird, die aus Chromsäureanhydrid, Chromatsalzen und Bichromatsalzen besteht, gefolgt vom Einbrennen, wobei Bedingung (I) oder (II) erfüllt ist:
(I) 800≤T<860, T≥1010 - 399R, 0,1 ≤R≤0,5
(II) 860≤T≤1000, T≥985 - 399R, 0,1≤R≤0,5
wobei T eine Stahlblechtemperatur T (Einheit: °C) beim Einbrennen bezeichnet, und R bezeichnet ein Gewichtsverhältnis (Cr₂O₅/P₂O₅) der Chromsäureverbindung (hinsichtlich P₂O₅) in der Beschichtungs-Behandlungslösung.

3. Verfahren zum Herstellen eines beschichteten, kornorientierten Elektrostahlblechs nach Anspruch 2,
wobei der Schritt des Herstellens eines kornorientierten Elektrostahlblechs ein Schritt ist, der das Warmwalzen einer Bramme für ein kornorientiertes Elektrostahlblech, das Tempern eines resultierenden warm gewalzten Stahlblechs, Kaltwalzen des getemperten Stahlblechs einmalig oder mindestens zweimalig mit Einsatz von Zwischenglühen, dann nach der primären Rekristallisierung Tempern und nachfolgende Anwendung eines Glühseparators, Unterziehen des Stahlblechs einer letzten Abschlusstemperung umfasst, um so das kornorientierte Elektrostahlblech zu erhalten, und
wobei eine Erwärmungsrate in einem Erwärmungsprozess von 500 °C auf 700 °C bei der primären Rekristallisierungs-Temperung 50 bis 300 °C/s beträgt.

## Revendications

1. Une tôle d'acier électrique à grains orientés revêtue comprenant :
une tôle d'acier électrique à grains orientés ; et
un revêtement qui est formé sur une surface de la tôle d'acier électrique à grains orientés, qui contient des éléments du P, Si, Cr et O ainsi qu'au moins un élément choisi dans le groupe constitué de Mg, Al, Ni, Co, Mn, Zn, Fe, Ca et Ba, et qui comprend au moins 5 % en poids de phase cristalline de phosphate.

2. Un procédé de fabrication d'une tôle d'acier électrique à grains orientés revêtue, comprenant les étapes consistant à :
préparer une tôle d'acier électrique à grains orientés ; et
obtenir la tôle d'acier électrique à grains orientés revêtue en appliquant sur une surface de la tôle d'acier électrique à grains orientés avec une solution de traitement de revêtement comprenant un sel de phosphate primaire contenant au moins un élément choisi dans le groupe constitué de Mg, Al, Ni, Co, Mn, Zn, Fe, Ca et Ba ; la silice colloïdale ; et au moins un composé acide chromique choisi dans le groupe constitué d'anhydride chromique, de sels de chromate et de sels de bichromate, suivi d'une cuisson au four,
dans laquelle la condition (i) ou (ii) est remplie :
(i) 800 ≤ T < 860, T ≥ 1010 - 399R, 0.1 ≤R ≤ 0.5
(ii) 860 ≤ T ≤ 1000, T ≥ 985 - 399R, 0.1 ≤ R ≤ 0.5
dans laquelle T représente une température T (unité : °C) de la tôle d'acier lors de la cuisson, et R représente un ratio pondéral (Cr₂O₃/ P₂0₅) du composé de l'acide chromique (en termes de Cr₂O₃) au sel de phosphate primaire (en termes de P₂O₅) dans la solution de traitement de revêtement.

3. Le procédé de fabrication d'une tôle d'acier électrique à grains orientés revêtue selon la revendication 2,
dans laquelle l'étape de préparation d'une tôle d'acier électrique à grains orientés est une étape impliquant le laminage à chaud d'une brame pour une tôle d'acier électrique à grains orientés, le recuit d'une tôle d'acier laminée à chaud obtenue, le laminage à froid de la tôle d'acier laminée une fois ou au moins deux fois avec intervention du recuit intermédiaire, puis après recuit de recristallisation primaire et application ultérieure d'un séparateur de recuit, la soumission de la tôle d'acier au recuit de finition final afin d'obtenir la tôle d'acier électrique à grains orientés, et
dans laquelle une vitesse de chauffage dans un processus de chauffage de 500 °C à 700 °C dans le recuit de recristallisation primaire est de 50 à 300 °C / sec.
